# EUROPEAN PATENT SPECIFICATION

(11) **EP 2 659 493 B1**
(45) Date of publication and mention of the grant of the patent: **09.08.2017**
(21) Application number: 11788683.8
(22) Date of filing: 09.11.2011
(51) Int. Cl.: H01B 3/47

(54) **METHOD OF MAKING A CABLE STRENGTH MEMBER**
VERFAHREN ZUR HERSTELLUNG EINES KABELVERSTÄRKUNGSELEMENTS
PROCÉDÉ DE FABRICATION D'UN ÉLÉMENT DE RENFORCEMENT POUR CÂBLE

(30) Priority: 29.12.2010 US 201061427942 P
(43) Date of publication of application: 06.11.2013
(73) Proprietor: Dow Global Technologies LLC, Midland, MI 48674 (US)
(72) Inventor: ZHOU, Huajun, Piermont, NY 10968 (US); CHEN, Buo, Hillsborough, NJ 08844 (US); NEUBAUER, Anthony, C., Piscataway, NJ 08854 (US); COGEN, Jeffrey, M., Flemington, NJ 08822 (US)
(74) Representative: Beck Greener
(86) International application number: PCT/US2011/059962
(87) International publication number: WO 2012/091806

(56) References cited:
- WO-A1-2012/044498
- WO-A2-2005/021638
- JP-A- 2004 341 266
- THOMASON J L ET AL: "Influence of fibre length and concentration on the properties of glass fibre-reinforced polypropylene: 4. Impact properties", COMPOSITES PART A: APPLIED SCIENCE AND MANUFACTURING, ELSEVIER SCIENCE PUBLISHERS B.V., AMSTERDAM, NL, vol. 28, no. 3, 1 January 1997 (1997-01-01), pages 277-288, XP004578187, ISSN: 1359-835X, DOI: 10.1016/S1359-835X(96)00127-3

## Description

### BACKGROUND OF THE INVENTION

### 1. Field of the Invention

This invention relates to cables. In one aspect the invention relates to strength members for cables while in another aspect, the invention relates to a method of making strength members for cables. In still another aspect the invention relates to a method of making strength members for cables that utilizes a dispersion of polymer in water while in yet another aspect, the invention relates to a cable comprising a strength member made by such a method.

### 2. Description of the Related Art

Many cables, e.g., fiber optic cables, typically include a strength member comprising at least one fiber or bundle of fibers. The strength member typically comprises one or more fibers of glass, aramid, carbon, etc., disposed within a polymeric matrix of epoxy, polyester, vinyl ester, polyolefin, acrylic, etc. The selection of the fiber and polymer is a function of the desired characteristics of the strength member which include, but are not limited to, modulus of elasticity, tensile strength, and coefficient of thermal expansion.

One method of making a strength member is resin-wetting enabled pultrusion. The method includes a step of wetting a fiber in a resin bath followed by a step of consolidating the resin on the fiber in a heated die. One disadvantage of this technology is the production speed which can be greatly limited by the wetting step and the kinetics of the consolidating step, the speed of both steps dependent, in large part, on the nature of the fiber and polymer.

Another method to make a strength member is polymer melt-coating enabled pultrusion. This method includes a step of coating a fiber with a polymer melt followed by a step of consolidating the polymer on the fiber in a heated die. Here again, the disadvantage is often the processing speed. Polymer melts, e.g., a melt comprising polypropylene, typically have high viscosity, even at elevated operating temperatures. If the melt includes filler, e.g., talc, the coated fiber can be almost impossible to process on a pultrusion line.

In order to achieve high modulus (e.g., greater than 50 gigaPascals (GPa)) and high tensile strength (e.g., greater than 1.4 GPa), fiber levels typically comprise more than 60 weight percent (wt%), typically more than 70 wt%, of the strength member. However, a high level of fiber and correspondingly low level of polymer can have a deleterious effect on the mechanical strength, heat resistance, and formability of the strength member. As such, a continuing interest exists in the cable manufacturing community for strength members that can be produced with enhanced polymer content with little or no sacrifice of production speed.

JP2004 341266 discloses a core material with a water dispersion of a polyolefin based resin applied to the outer surface.

Influence of fibre length and concentration on the properties of glass fibre-reinforced polypropylene: 4. Impact Properties by Thomason et al, Composites Part A: Applied Science and Manufacturing, Vol 28, No. 3, January 1997, pages 277-288 discloses a method of producing a glass fibre reinforced polypropylene.

WO2005/021638 discloses an aqueous dispersion of polypropylene.

WO2012./044498 a fibre reinforced plastic material.

### SUMMARY OF THE INVENTION

In one embodiment the invention is a method to produce a strength member for cable, the method comprising the steps of:
A. Wetting a fiber from a plurality of spools, the fiber comprising a polymeric material or carbon, with an aqueous polymeric dispersion having a viscosity less than 800 mPa-s to form a wetted fiber, the dispersion comprising:
   1. At least one thermoplastic resin selected from an alpha-olefin interpolymer of ethylene with at least one comonomer selected from the group consisting of a C₄-C₂₀ linear, branched or cyclic diene, an ethylene vinyl compound, and a compound represented by the formula H₂C=CHR wherein R is a C₁-C₂₀ linear, branched or cyclic alkyl group or a C₆-C₂₀ aryl group and an alpha-olefin interpolymer of propylene with at least one comonomer selected from the group consisting of ethylene, a C₄-C₂₀ linear, branched or cyclic diene, and a compound represented by the formula H₂C=CHR wherein R is a C₁-C₂₀ linear, branched or cyclic alkyl group or a C₆-C₂₀ aryl group;
   2. At least one dispersing agent selected from a surfactant, a polymer different from the thermoplastic resin, and mixtures thereof; and
   3. Water;
B. Removing the water from the wetted fiber, and
C. Consolidating the resin on the fiber with or without curing.
In one embodiment steps (B) and (C) are performed sequentially. In one embodiment steps (B) and (C) are performed simultaneously. In one embodiment the dispersion has a volume average particle size of less than 5 microns (µm). In one embodiment the dispersion has a particle size of less than 5 µm and a pH from 5 to 11.5.

In one embodiment the invention is a strength member prepared by the inventive method. In one embodiment the invention is a cable, e.g., a fiber optic cable, comprising a strength member prepared by the inventive method.

### BRIEF DESCRIPTION OF THE DRAWINGS

The invention is described generally with reference to the drawings for the purpose of illustrating certain embodiments only, and not for the purpose of limiting the scope of the invention. In the drawings like numerals are used to designate like parts throughout the same.
Figure 1 is a schematic of a pultrusion process.
Figure 2 is a schematic of the pulfusion die design.
Figure 3 is a graph of percent concentration versus polymer uptake of Example 1.
Figure 4 is a graph of residence time versus polymer uptake of Example 1.

### DETAILED DESCRIPTION OF THE PREFERRED EMBODIMENT

### Definitions

Unless stated otherwise, implicit from the context, or customary in the art, all parts and percents are based on weight and all test methods are current as of the filing date of this disclosure. For purposes of United States patent practice, the contents of any referenced patent, patent application or publication are incorporated by reference in their entirety (or its equivalent US version is so incorporated by reference) especially with respect to the disclosure of definitions (to the extent not inconsistent with any definitions specifically provided in this disclosure) and general knowledge in the art.

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, molecular weight, etc., is from 100 to 1,000, then all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, the amount of various components of the composition, the parameters of the process, and the like.

"Comprising", "including", "having" and like terms are not intended to exclude the presence of any additional component, step or procedure, whether or not the same is specifically disclosed. In order to avoid any doubt, all processes claimed through use of the term "comprising" may include one or more additional steps, pieces of equipment or component parts, and/or materials unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed. The term "or", unless stated otherwise, refers to the listed members individually as well as in any combination.

"Composition", "formulation" and like terms means a mixture or blend of two or more components. In the context of an aqueous polymeric dispersion, the composition includes all the components of the dispersion, i.e., thermoplastic resin, dispersing agent, water and any additives and/or fillers.

"Dispersion" and like terms mean a system in which particles are dispersed in a continuous phase of a composition. In the context of this invention, the particles can be solid or liquid and, as such, as here used the term "dispersion" includes emulsions which are typically defined as a mixture of two or more immiscible (unblended) liquids.

"Polymer" means a compound prepared by polymerizing monomers, whether of the same or a different type. The generic term polymer thus embraces the term homopolymer, usually employed to refer to polymers prepared from only one type of monomer, and the term interpolymer as defined below.

""Interpolymer" means a polymer prepared by the polymerization of at least two different types of monomers. This generic term includes copolymers, usually employed to refer to polymers prepared from two different types of monomers, and polymers prepared from more than two different types of monomers, e.g., terpolymers, tetrapolymers, etc.

"Filament" and like terms mean a single, continuous strand of elongated material having a length to diameter ratio of greater than 10. Filament typically refers to a strand made from a polymeric material.

"Fiber" and like terms mean an elongated column of entangled filaments having a generally round cross-section and a length to diameter ratio greater than 10.

"Wire" and like terms mean a single strand of conductive metal, e.g., copper or aluminum, or a single strand of optical fiber.

"Cable", "power cable" and like terms mean at least one wire or optical fiber within a sheath, e.g., an insulation covering or a protective outer jacket. Typically, a cable is two or more wires or optical fibers bound together, typically in a common insulation covering and/or protective jacket. The individual wires or fibers inside the sheath may be bare, covered or insulated. Combination cables may contain both electrical wires and optical fibers. The cable, etc. can be designed for low, medium and high voltage applications. Typical cable designs are illustrated in USP 5,246,783, 6,496,629 and 6,714,707.

### Aqueous Dispersion

The aqueous dispersions used in the practice of this invention are described in USP 7,803,865 and United States Patent Application Publication US 2010/0255207.

In one embodiment the dispersions used in the practice of this invention comprise solid particles with an advantageous particle size distribution. In one embodiment the dispersion has a solid particle size distribution defined as volume average solid particle diameter (Dv) divided by number average solid particle diameter (Dn) of less than or equal to 2.0. In one embodiment the dispersion has a solid particle size distribution of less than or equal to 1.5.

In one embodiment the dispersions used in the practice of this invention are typically characterized as having an average solid particle size from 0.1 microns (µm) to 5.0 µm. In other embodiments the dispersions have an average solid particle size from 0.5 µm to 2.7 µm. In other embodiments the dispersions have an average solid particle size from 0.8 µm to 1.2 µm. "Average solid particle size" means the volume-mean solid particle size. One method of measuring the solid particle size is by laser-diffraction. A solid particle size in this description refers to the diameter of the solid polymer particle in the dispersion. For solid polymer particles that are not spherical, the diameter of the particle is the average of the long and short axes of the particle. Solid particle sizes may be measured on a Beckman-Coulter LS230 laser-diffraction particle size analyzer or other suitable devices, such as the DOWM 102 E06A.

The particulate materials, typically solids, (e.g., thermoplastic resin plus dispersing agent) are dispersed in water. The water can be used in combination with one or more other dispersing liquids, e.g., alcohols, aldehydes, ketones, etc., but preferably is used neat, i.e., not in combination with any other dispersing liquid. The water content of the dispersion is preferably controlled so that the particle content is from 1 percent by volume (vol%) to 74 vol%. In another embodiment the particle content is from 25 vol% to 74 vol%. In another embodiment the particle content is from 10 wt% to 70 wt%. In another embodiment the particle content is from 20 wt% to 60 wt%. In one embodiment the particle content is from 30 wt% to 55 wt%.

In one embodiment sufficient neutralizing agent is added to neutralize the resultant dispersion to achieve a pH range from 4 to 14. In one embodiment sufficient base is added to maintain a pH from 6 to 11, while in one embodiment the pH is from 8 to 10.5.

In one embodiment the aqueous dispersion has a viscosity of less than 800 milliPascal-second (mPa-s), typically less than 600 mPa-s, and more typically less than 400 mPa-s.

### Thermoplastic Resin (i.e., Base Polymer)

In some dispersions the thermoplastic resin or base polymer is an alpha-olefin interpolymer of ethylene with at least one comonomer selected from the group consisting of a C₄-C₂₀ linear, branched or cyclic diene, or an ethylene vinyl compound, such as vinyl acetate, and a compound represented by the formula H₂C=CHR wherein R is a C₁-C₂₀ linear, branched or cyclic alkyl group or a C₆-C₂₀ aryl group. Preferred comonomers include propylene, 1-butene, 3-methyl-1-butene, 4-methyl-1-pentene, 3-methyl-1-pentene, 1-heptene, 1-hexene, 1-octene, 1-decene, and 1-dodecene. In some embodiments the interpolymer of ethylene has a density of less than 0.92 g/cm³.

In other embodiments the thermoplastic resin comprises an alpha-olefin interpolymer of propylene with at least one comonomer selected from the group consisting of ethylene, a C₄-C₂₀ linear, branched or cyclic diene, and a compound represented by the formula H₂C=CHR wherein R is a C₁-C₂₀ linear, branched or cyclic alkyl group or a C₆-C₂₀ aryl group. Preferred comonomers include ethylene, 1-butene, 3-methyl-1-butene, 4-methyl-1-pentene, 3-methyl-1-pentene, 1-heptene, 1-hexene, 1-octene, 1-decene, and 1-dodecene. In some embodiments, the comonomer is present at 5 wt% to 25 wt% of the interpolymer. In some embodiments a propylene-ethylene interpolymer is preferred.

Some interpolymers of propylene that are useful in particular embodiments are propylene-rich alpha-olefin interpolymer comprising 5 wt% to 25 wt% of ethylene-derived units and 95 wt% to 75 wt% of propylene-derived units. In some embodiments preferred propylene rich alpha-olefin interpolymers have (a) a melting point of less than 90°C, (b) a relationship of elasticity to 500% tensile modulus such that the elasticity is less than or equal to 0.935M+12, where elasticity is in percent and M is the 500% tensile modulus in megapascals (MPa), and (c) a relationship of flexural modulus to 500% tensile modulus such that flexural modulus is less than or equal to 4.2e^{0.27M}+50, where flexural modulus is in MPa and M is the 500% tensile modulus in MPa. In some embodiments the propylene rich alpha-olefin interpolymer comprises 6% to 20% by weight of ethylene-derived units and 94% to 80% by weight of propylene-derived units. In other embodiments the propylene rich alpha-olefin interpolymer comprises 8 wt% to 20 wt% of ethylene-derived units and 92 wt% to 80 wt% of propylene-derived units. In still other embodiments the propylene rich alpha-olefin interpolymer comprises 10 wt% to 20 wt% of ethylene-derived units and 90 wt% to 80 wt% of propylene-derived units.

In other embodiments a propylene-rich alpha-olefin interpolymer comprises a copolymer of propylene and at least one comonomer selected from the group consisting of ethylene and C₄ to C₂₀ alpha-olefins, wherein the copolymer has a (a) propylene content of greater than 65 mole percent, (b) weight average molecular weight (Mw) from 15,000 g/gmole to 200,000 g/gmole, and (c) weight average molecular weight/number average molecular weight (Mn) ratio (Mw/Mn) from 1.5 to 4.

Some propylene-rich alpha-olefin interpolymers have a heat of fusion of less than 80 Joules per gram (J/g), preferably from 8 J/g to 80 J/g, more preferably from 30 J/g to 80 J/g, as determined by differential scanning calorimetry (DSC).

In some embodiments the at least one thermoplastic resin has a crystallinity of 5% to 78% or more. In some embodiments the at least one thermoplastic resin has a crystallinity of less than 50%. In other embodiments, the crystallinity ranges from 5% to 45%, or from 5% to 40%. In some embodiments the at least one thermoplastic resin has a crystallinity of 50% or more. In other embodiments the crystallinity ranges from 50% to 78% or more, or from 55% to 75%.

In one embodiment the aqueous dispersion comprises a single thermoplastic resin. In one embodiment the aqueous dispersion comprises two or more thermoplastic resins.

### Dispersing Agent (i. e. Stabilizing Agent)

Embodiments of the present invention use a dispersing agent or stabilizing agent to promote the formation of a stable dispersion. The stabilizing agent is a surfactant, a polymer (different from the thermoplastic resin detailed above), or mixtures thereof. In certain embodiments the dispersing agent may be a polar polymer having a polar group as either a comonomer or grafted monomer. In preferred embodiments the dispersing agent comprises one or more polar polyolefins having a polar group as either a comonomer or grafted monomer. For example, the dispersing agent may include an ethylene/alpha-beta unsaturated carboxylic acid copolymer. In some embodiments the ethylene/alpha-beta unsaturated carboxylic acid copolymer may include an ethylene-acid copolymer, such as an ethylene-acrylic acid copolymer or an ethylene methacrylic acid copolymer.

Typical dispersing agent polymers include ethylene-acrylic acid (EAA) and ethylene-methacrylic acid copolymers, such as those available under the trademarks PRIMACOR™ (a product of The Dow Chemical Company), NUCREL™ (a product of E.I. DuPont de Nemours), and ESCOR™ (a product of ExxonMobil) and described in USP 4,599,392, 4,988,781, and 5,938,437. Other polymers include ethylene ethyl acrylate (EEA) copolymer, ethylene methyl methacrylate (EMMA), and ethylene butyl acrylate (EBA). Other ethylene-carboxylic acid copolymer may also be used. Those having ordinary skill in the art will recognize that a number of other useful polymers may also be used.

Other dispersing agents that may be used include long chain fatty acids or fatty acid salts having from 12 to 60 carbon atoms. In other embodiments the long chain fatty acid or fatty acid salt may have from 12 to 40 carbon atoms.

If the polar group of the polymer is acidic or basic in nature, the stabilizing polymer (i.e., dispersing agent) may be partially or fully neutralized with a neutralizing agent to form the corresponding salt. In certain embodiments, neutralization of the stabilizing agent, such as a long chain fatty acid or EAA, may be from 25% to 200% on a molar basis; from 50% to 110% on a molar basis in other embodiments. For example, for EAA, the neutralizing agent is a base, such as ammonium hydroxide or potassium hydroxide, for example. Other neutralizing agents may include lithium hydroxide or sodium hydroxide, for example. Those having ordinary skill in the art will appreciate that the selection of an appropriate neutralizing agent depends on the specific composition formulated, and that such a choice is within the knowledge of those of ordinary skill in the art.

Additional surfactants (i.e., dispersing agents) that may be useful in the practice of the present invention include cationic surfactants, anionic surfactants, zwitterionic, or nonionic surfactants. Examples of anionic surfactants include sulfonates, carboxylates, and phosphates. Examples of cationic surfactants include quaternary amines. Examples of nonionic surfactants include block copolymers containing ethylene oxide and silicone surfactants. Surfactants useful in the practice of the present invention may be either external surfactants or internal surfactants. External surfactants are surfactants that do not become chemically reacted into the polymer during dispersion preparation. Examples of external surfactants useful in the practice of this invention include salts of dodecyl benzene sulfonic acid and lauryl sulfonic acid salt. Internal surfactants are surfactants that do become chemically reacted into the polymer during dispersion preparation. An example of an internal surfactant useful herein includes 2,2-dimethylol propionic acid and its salts.

In particular embodiments, the dispersing agent may be used in an amount ranging from greater than zero to 60% by weight based on the amount of the thermoplastic resin (i.e., base polymer or base polymer mixture) used. For example, long chain fatty acids or their salts may be used in an amount ranging from 0.5 wt% to 10 wt% based on the amount of base polymer. In other embodiments, ethylene-acrylic acid or ethylene-methacrylic acid copolymers may be used in an amount from 0.5 wt% to 60 wt% based on the amount of base polymer. In yet other embodiments sulfonic acid salts may be used in an amount from 0.5 wt% to 10 wt% based on the amount of base polymer.

### Additives

Additives may be used with the base polymer, dispersing agent, or filler used in the dispersion without deviating from the scope of the present invention. For example, additives may include wetting agents, surfactants, anti-static agents, antifoam agents, anti-block agents, wax-dispersion pigments, neutralizing agents, thickeners, compatibilizers, brighteners, rheology modifiers, biocides, fungicides, shear stabilizers, UV stabilizers, coefficient of friction modifiers, and other additives known to those skilled in the art. If used at all, additives are used in know amounts and known ways.

### Fillers

Embodiments of the dispersions used in the practice of this invention may include one or more fillers. If used, then a suitable filler loading is from greater than 0 parts to 600 parts of filler per hundred parts of thermoplastic resin. In certain embodiments the filler loading in the dispersion may be from greater than 0 parts to 200 parts of filler per hundred parts of a combined amount of the thermoplastic resin and dispersing agent.

The filler material may include conventional fillers such as milled glass, calcium carbonate, aluminum trihydrate, talc, antimony trioxide, fly ash, clays (such as bentonite or kaolin clays), titanium dioxide, zeolites, powdered metals, organic or inorganic fibers, including carbon fibers, silicon nitride fibers, steel wire or mesh, and nylon or polyester cording, nano-sized particles, tackifiers, oil extenders, including paraffinic or napthelenic oils, and other known fillers.

### Reparation of the Dispersion

The dispersions used in the practice of this invention may be formed by any number of methods recognized by those having skill in the art. In selected embodiments the dispersions may be formed by using techniques, for example, in accordance with the procedures as described in WO2005/021638.

In one embodiment the thermoplastic resin (i.e., base polymer) and dispersing agent are melt-kneaded along with water and a neutralizing agent to form a dispersion. Those having ordinary skill in the art will recognize that a number of other neutralizing agents may be used. In some embodiments additives and filler may be added after blending the base polymer and dispersing agent. In some embodiments the dispersion is first diluted to contain 1 wt% to 3 wt% water and, subsequently, further diluted to comprise greater than 25 wt% water.

Any melt-kneading means known in the art may be used. In some embodiments a kneader, a BANBURY™ mixer, single-screw extruder or a multi-screw extruder is used. The process for producing the dispersions for use in the present invention is not particularly limited. One preferred process, for example, comprises melt-kneading the dispersion components according to USP 5,756,659 or 6,455,636.

### Fiber

The fibers used in the practice of this invention can vary widely in both composition and construction. Strength fibers typically comprise such polymeric materials as fiberglass, aramid and carbon. The fibers can comprise a single fiber or a fiber bundle. Although technically not fiber, wire bundles can also be used as the substrate to which the dispersion is applied. Mixtures of fiber and wire can also be employed.

### Pultrusion Process

The pultrusion process of the invention utilizes the dispersion described above combined with a heat fusion process to produce a strength member for cable, particularly a fiber optic cable. The dispersion is applied to a fiber or fiber bundle so as to coat and/or impregnate the fiber or fiber bundle.

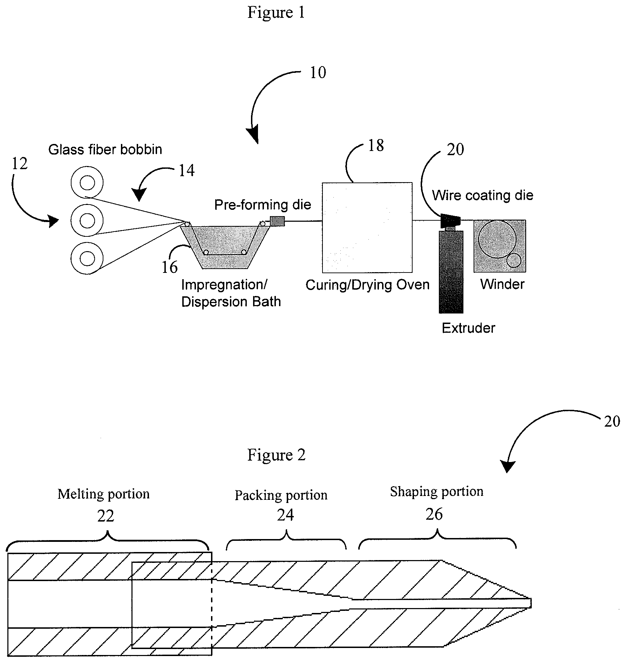

Figure 1 illustrates one embodiment of the invention. Pultrusion method **10** includes passing a fiber (or a fiber bundle) **14** stored on a plurality of spools **12** through one or more impregnation baths **16** comprising the aqueous dispersion as described above. The dispersion wets the fiber to form a wetted fiber. Typcially the wetted fiber is fully coated and/or impregnated as it leaves the bath. The dispersion has a very low viscosity, e.g., less than 800 mPa-s, which contributes to the efficiency of the wetting process.

After the fiber exits the bath, water is then removed from the wetted fiber by passing the wetted fiber through drying oven **18** to reduce, if not completely eliminate, leaving a polymer-coated fiber. The polymer particles are uniformly coated on the fiber surfaces, which in turn reduces or eliminates voids from forming in the finished product. The temperature of the oven is typically from 80°C to 300°C, more typically from 100°C to 270°C, and most typically from 180°C to 250°C. The moisture content of the fiber can be measured by any one of various methods, e.g., ASTM D7501-09b. Typically the moisture content of the dried, polymer-coated fiber is less than 1 wt%, more typically less than 0.5 wt%, and more typically less than 0.1 wt%.

The amount of polymer coated on the fiber depends on a number of variables including the dispersion concentration, wet-out speed, and surface energy of the fibers. The amount of polymer coated onto and/or impregnated into the fiber can be accurately controlled by adjusting these variables.

In an optional finishing step, the dried polymer-coated fiber is pulled through die 20 with an appropriate temperature setting (typically, 20°C to 100°C higher than the melting point of the polymer particle). This optional finishing step is referred to as the consolidation or consolidating step. Die **20** has a melting zone **22** that is in fluid communication with the narrower packing zone **24** that is in fluid communication with the even narrower shaping zone **26.** Inside melting zone **22** the polymer particles of the dried polymer-coated fiber are melted; the fibers are then fused together in packing zone **24;** and then the fibers are cross-sectionally shaped as desired in shaping zone **26.** Optionally, one or more additional polymer layers may be extruded onto the surface of the composite to achieve a smooth finish.

### Application

The method of the invention may be used to form a strength member that may be used in, for example, a fiber optic fiber cable. The method may also be used to form fiber-reinforced composites encased in a thermoplastic coating. Examples of other applications include skis, ski poles, mast stays, tent poles, concrete reinforcement, crash barriers, cable trays, cable for optical fibers, bicycle wheels and frames, and pipe.

### SPECIFIC EMBODIMENTS

The dispersion composition of Example 1 is shown in Table 1.

**Table 1**

| Percent Composition of Example 1 | |
|---|---|
| | Percent Composition (%) |
| Water | 56.65 |
| 6D43 Polypropylene | 28.00 |
| PRIMACOR™ 5980i | 9.00 |
| LICOCENE® 6452 | 3.00 |
| DMEA | 3.35 |

The dispersion of Example 1 has a volume mean particle size of 1.2 microns, a solid content of 39.7 wt%, a viscosity of 94 centipoise (cP, RV#2 at 50 rpm), and a pH of 9.6.

The properties of the polypropylene used in Example 1 are reported in Table 2.

**Table 2**

| Properties of 6D43 Polypropylene | | |
|---|---|---|
| **Property** | **Value** | **Test Method** |
| Density | 0.9 g/cm³ | ASTM D792 |
| Melt Flow Rate | 35g/10min (230°C/2.16kg) | ASTM D1238 |
| Peak Melting Point | 148°C | DSC |

The dispersion of Example 1 is placed in the dispersion bath and the oven is set to 250°C. The pultrusion die is a 0.090 inch (2.3 mm) round die and is set to different pulfusion speed and temperature settings as indicated in Table 3 to produce a strength member on a modified pultrusion line as demonstrated in Figure 1.

PRIMACOR™ 5980i, available from The Dow Chemical Company, is a copolymer of ethylene and acrylic acid comprising 20.5% acrylic acid by weight and having a melt index (125°C/2.16kg) of 14 g/10 minutes and a density of 0.958 g/cm³.

LICOCENE® 6452, available from Clariant, is a maleic anhydride-containing metallocene polypropylene wax with a softening point at approximately 140°C, an acid value of approximately 43 mg KOH/g, a density at 23°C of approximately 0.90 g/cm³, and a viscosity at 140°C of approximately 1200 mPa-s.

Table 3 demonstrates the bending performance of the strength member prepared using the dispersion of Example 1. The wet/dry determination is performed by visual inspection of the bubble presence in the die which is created by moisture evaporation. Fusion is determined by a digital microscope and image analysis of the surface and internal cracks. The bending performance is determined by wrapping the strength member around metal mandrels with radii of 25, 40, and 50 times the diameter of the strength member. Visual inspection determines cracking or buckling.

**Table 3**

| Bending Performance of Strength Members | | | | | |
|---|---|---|---|---|---|
| **Example** | **Temperature °C** | **Speed ft/min (m/min)** | **Wet/Dry** | **Fusion** | **Bending Radius** |
| 1 | 200 | 1.0 (0.30) | Wet | No | Failed at 50D |
| 2 | 200 | 0.5 (0.15) | Dry | No | Failed at 50D |
| 3 | 220 | 0.5 (0.15) | Dry | No | Failed at 50D |
| 4 | 240 | 0.5 (0.15) | Dry | Yes | Successful at 25D |
| 5 | 260 | 0.5 (0.15) | Dry | Yes | Successful at 25D |

The results reported in Table 3 indicate the bonding quality of the polypropylene particles on the glass fibers is successful when the temperature of the die is set above 240°C. The bending radius is passed when the strength member does not break when bent around a mandrel with a radius of 25 times the diameter of the strength member.

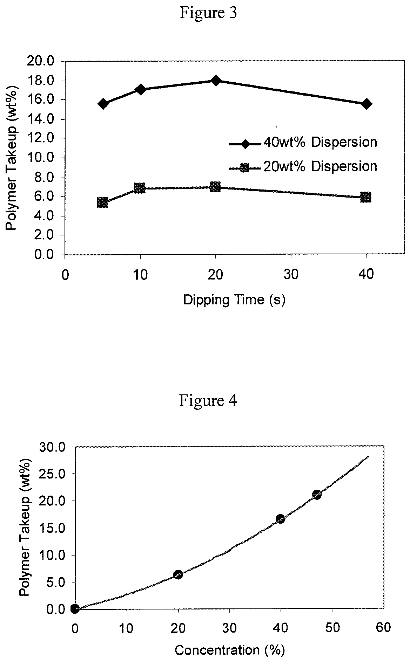

Figure 3 demonstrates the correlation between polymer uptake and dispersion concentration for the dispersion of Example 1. The results indicate that the polymer uptake is directly affected by the dispersion concentration provided that rest of the composition is kept in the same proportion. In order to achieve the industrial requirement of tensile modulus with the dispersion shown in Example 1, the glass fiber content needs to reach 81 wt% and a polymer content of 19 wt%. To reach the critical requirement of 19 wt% of the polymer, dispersion with 47 wt% concentration is desired.

Figure 4 demonstrates the correlation between polymer uptake and residence dipping time. Using the dispersion of Example 1, the residence time has little effect on the polymer uptake. The residence time of 5 seconds appears adequate and presumably represents the approximate minimum critical time requirement.

Although the invention has been described with certain detail through the preceding description of the preferred embodiments, this detail is for the primary purpose of illustration.

## Claims

1. A method to produce a strength member for cable, the method comprising the steps of:
A. Wetting a fiber from a plurality of spools, the fiber comprising a polymeric material or carbon, with an aqueous polymeric dispersion having a viscosity less than 800 mPa-s to form a wetted fiber, the dispersion comprising:
1. At least one thermoplastic resin selected from an alpha-olefin interpolymer of ethylene with at least one comonomer selected from the group consisting of a C₄-C₂₀ linear, branched or cyclic diene, an ethylene vinyl compound, and a compound represented by the formula H₂C=CHR wherein R is a C₁-C₂₀ linear, branched or cyclic alkyl group or a C₆-C₂₀ aryl group and an alpha-olefin interpolymer of propylene with at least one comonomer selected from the group consisting of ethylene, a C₄-C₂₀ linear, branched or cyclic diene, and a compound represented by the formula H₂C=CHR wherein R is a C₁-C₂₀ linear, branched or cyclic alkyl group or a C₆-C₂₀ aryl group;
2. At least one dispersing agent selected from a surfactant, a polymer different from the thermoplastic resin, and mixtures thereof; and
3. Water;
B. Removing the water from the wetted fiber, and
C. Consolidating the resin on the fiber with or without curing.

2. The method of Claim 1 in which steps (B) and (C) are performed sequentially.

3. The method of Claim 1 in which steps (B) and (C) are performed simultaneously.

4. The method of Claim 1 further comprising the step of applying one or more finish coatings to the fiber surface.

5. The method of Claim 1 in which water is removed in step (B) by passing the wetted fiber through a drying oven operating at a temperature of 80°C to 300°C.

6. The method of Claim 1 in which the resin is consolidated in step (C) by passing the de-watered fiber of step (B) through a die heated to a temperature of at least 20°C higher than the melting temperature of the polymer particle.

7. The method of claim 1, wherein the fiber comprises fiberglass, aramid or carbon..

8. The method of Claim 1 in which the resin is an alpha-olefin interpolymer of propylene with at least one comonomer selected from the group consisting of ethylene, a C₄-C₂₀ linear, branched or cyclic diene, and a compound represented by the formula H₂C=CHR wherein R is a C₁-C₂₀ linear, branched or cyclic alkyl group or a C₆-C₂₀ aryl group.

9. The method of Claim 1 in which the dispersing agent is an ethylene/alpha-beta unsaturated carboxylic acid copolymer.

10. The method of Claim 1 in which the dispersion comprises at least one of an additive and filler.

11. The method of Claim 1 in which the dispersion comprises 0.1 wt% to 65.0 wt% of thermoplastic resin, 0.25 wt% to 35 wt% of dispersing agent, and 30 wt% to 90 wt% of water based on the weight of the dispersion.

12. A strength member prepared by the method of Claim 1.

13. A cable comprising the strength member of Claim 12.

14. A fiber optic cable comprising the strength member of Claim 12.

## Patentansprüche

1. Ein Verfahren zum Produzieren eines Verstärkungselements für Kabel, wobei das Verfahren die folgenden Schritte beinhaltet:
A. Benetzen einer Faser von einer Vielzahl von Spulen, wobei die Faser ein Polymermaterial oder Kohlenstoff beinhaltet, mit einer wässrigen Polymerdispersion, die eine Viskosität von weniger als 800 mPa-s aufweist, um eine benetzte Faser zu bilden, wobei die Dispersion Folgendes beinhaltet:
1. mindestens ein thermoplastisches Harz, ausgewählt aus einem alpha-Olefin-Mischpolymer von Ethylen mit mindestens einem Comonomer, ausgewählt aus der Gruppe, bestehend aus einem linearen, verzweigten oder cyclischen C₄-C₂₀-Dien, einer Ethylenvinylverbindung und einer durch die Formel H₂C=CHR dargestellten Verbindung, wobei R eine lineare, verzweigte oder cyclische C₁-C₂₀-Alkylgruppe oder eine C₆-C₂₀-Arylgruppe ist, und einem alpha-Olefin-Mischpolymer von Propylen mit mindestens einem Comonomer, ausgewählt aus der Gruppe, bestehend aus Ethylen, einem linearen, verzweigten oder cyclischen C₄-C₂₀-Dien und einer durch die Formel H₂C=CHR dargestellten Verbindung, wobei R eine lineare, verzweigte oder cyclische C₁-C₂₀-Alkylgruppe oder eine C₆-C₂₀-Arylgruppe ist;
2. mindestens ein Dispergiermittel, ausgewählt aus einem Tensid, einem Polymer, das sich von dem thermoplastischen Harz unterscheidet, und Mischungen davon; und
3. Wasser;
B. Entfernen des Wassers von der benetzten Faser und
C. Verfestigen des Harzes auf der Faser mit oder ohne Aushärten.

2. Verfahren gemäß Anspruch 1, wobei die Schritte (B) und (C) nacheinander durchgeführt werden.

3. Verfahren gemäß Anspruch 1, wobei die Schritte (B) und (C) gleichzeitig durchgeführt werden.

4. Verfahren gemäß Anspruch 1, das ferner den Schritt des Auftragens einer oder mehrerer Deckbeschichtungen auf die Faseroberfläche beinhaltet.

5. Verfahren gemäß Anspruch 1, wobei in Schritt (B) Wasser entfernt wird, indem die benetzte Faser durch einen Trockenofen geführt wird, der mit einer Temperatur von 80 °C bis 300 °C betrieben wird.

6. Verfahren gemäß Anspruch 1, wobei das Harz in Schritt (C) verfestigt wird, indem die entwässerte Faser aus Schritt (B) durch ein Werkzeug geführt wird, das auf eine Temperatur von mindestens 20 °C über der Schmelztemperatur des Polymerpartikels erhitzt ist.

7. Verfahren gemäß Anspruch 1, wobei die Faser Faserglas, Aramid oder Kohlenstoff beinhaltet.

8. Verfahren gemäß Anspruch 1, wobei das Harz ein alpha-Olefin-Mischpolymer von Propylen mit mindestens einem Comonomer, ausgewählt aus der Gruppe, bestehend aus Ethylen, einem linearen, verzweigten oder cyclischen C₄-C₂₀-Dien und einer durch die Formel H₂C=CHR dargestellten Verbindung, ist, wobei R eine lineare, verzweigte oder cyclische C₁-C₂₀-Alkylgruppe oder eine C₆-C₂₀-Arylgruppe ist.

9. Verfahren gemäß Anspruch 1, wobei das Dispergiermittel ein Copolymer von Ethylen und alpha-beta-ungesättigter Carbonsäure ist.

10. Verfahren gemäß Anspruch 1, wobei die Dispersion mindestens eines von einem Additiv und Füllstoff beinhaltet.

11. Verfahren gemäß Anspruch 1, wobei die Dispersion bezogen auf das Gewicht der Dispersion zu 0,1 Gew.-% bis 65,0 Gew.-% thermoplastisches Harz, zu 0,25 Gew.-% bis 35 Gew.-% Dispergiermittel und 30 Gew.-% bis 90 Gew.-% Wasser beinhaltet.

12. Ein Verstärkungselement, hergestellt durch das Verfahren gemäß Anspruch 1.

13. Ein Kabel, welches das Verstärkungselement gemäß Anspruch 12 beinhaltet.

14. Ein Lichtwellenleiterkabel, welches das Verstärkungselement gemäß Anspruch 12 beinhaltet.

## Revendications

1. Une méthode afin de produire un élément de renforcement pour câble, la méthode comprenant les étapes consistant :
A. à mouiller une fibre provenant d'une pluralité de bobines, la fibre comprenant un matériau polymère ou du carbone, avec une dispersion polymère aqueuse possédant une viscosité inférieure à 800 mPa-s afin de former une fibre mouillée, la dispersion comprenant :
1. au moins une résine thermoplastique sélectionnée parmi un interpolymère alpha-oléfinique d'éthylène avec au moins un comonomère sélectionné dans le groupe constitué d'un diène en C₄-C₂₀ linéaire, ramifié ou cyclique, d'un composé éthylène vinyle, et d'un composé représenté par la formule H₂C=CHR où R est un groupe alkyle en C₁-C₂₀ linéaire, ramifié ou cyclique ou un groupe aryle en C₆-C₂₀ et un interpolymère alpha-oléfinique de propylène avec au moins un comonomère sélectionné dans le groupe constitué de l'éthylène, d'un diène en C₄-C₂₀ linéaire, ramifié ou cyclique, et d'un composé représenté par la formule H₂C=CHR où R est un groupe alkyle en C₁-C₂₀ linéaire, ramifié ou cyclique ou un groupe aryle en C₆-C20 ;
2. au moins un agent dispersant sélectionné parmi un tensioactif, un polymère différent de la résine thermoplastique, et des mélanges de ceux-ci ; et
3. de l'eau ;
B. à retirer l'eau de la fibre mouillée, et
C. à consolider la résine sur la fibre avec ou sans durcissement.

2. La méthode de la revendication 1 dans laquelle les étapes (B) et (C) sont effectuées séquentiellement.

3. La méthode de la revendication 1 dans laquelle les étapes (B) et (C) sont effectuées simultanément.

4. La méthode de la revendication 1 comprenant en sus l'étape consistant à appliquer un ou plusieurs revêtements de finition sur la surface de la fibre.

5. La méthode de la revendication 1 dans laquelle l'eau est retirée à l'étape (B) en faisant passer la fibre mouillée à travers une étuve de séchage fonctionnant à une température allant de 80 °C à 300 °C.

6. La méthode de la revendication 1 dans laquelle la résine est consolidée à l'étape (C) en faisant passer la fibre déshydratée de l'étape (B) à travers une filière chauffée jusqu'à une température supérieure d'au moins 20 °C à la température de fusion de la particule de polymère.

7. La méthode de la revendication 1, où la fibre comprend de la fibre de verre, de l'aramide ou du carbone.

8. La méthode de la revendication 1 dans laquelle la résine est un interpolymère alpha-oléfinique de propylène avec au moins un comonomère sélectionné dans le groupe constitué de l'éthylène, d'un diène en C₄-C₂₀ linéaire, ramifié ou cyclique, et d'un composé représenté par la formule H₂C=CHR où R est un groupe alkyle en C₁-C₂₀ linéaire, ramifié ou cyclique ou un groupe aryle en C₆-C₂₀.

9. La méthode de la revendication 1 dans laquelle l'agent dispersant est un copolymère d'éthylène/acide carboxylique alpha-bêta insaturé.

10. La méthode de la revendication 1 dans laquelle la dispersion comprend au moins soit un additif, soit une charge.

11. La méthode de la revendication 1 dans laquelle la dispersion comprend de 0,1 % en poids à 65,0 % en poids de résine thermoplastique, de 0,25 % en poids à 35 % en poids d'agent dispersant, et de 30 % en poids à 90 % en poids d'eau rapporté au poids de la dispersion.

12. Un élément de renforcement préparé par la méthode de la revendication 1.

13. Un câble comprenant l'élément de renforcement de la revendication 12.

14. Un câble à fibres optiques comprenant l'élément de renforcement de la revendication 12.
